# FASCICULE DE BREVET EUROPEEN

(11) **EP 4 016 767 B1**
(45) Date de publication et mention de la délivrance du brevet: **02.08.2023**
(21) Numéro de dépôt: 21214592.4
(22) Date de dépôt: 15.12.2021
(51) Int. Cl.: H02G 1/02, H01R 4/64, H01R 11/15, B25B 5/10, B25B 5/16, H01R 13/639

(54) **DISPOSITIF DE MISE A LA TERRE D'AU MOINS UN CONDUCTEUR ELECTRIQUE D'UNE LIGNE AERIENNE**
VORRICHTUNG ZUR ERDUNG VON MINDESTENS EINEM ELEKTRISCHEN LEITER EINER FREILEITUNG
DEVICE FOR EARTHING AT LEAST ONE ELECTRICAL CONDUCTOR OF AN OVERHEAD LINE

(30) Priorité: 16.12.2020 FR 2013338
(43) Date de publication de la demande: 22.06.2022
(73) Titulaire: Fameca, 68170 Rixheim (FR)
(72) Inventeur: SCHEIDT, Frédéric, 68440 SCHLIERBACH (FR); ROY, Benoit, 68170 RIXHEIM (FR); CONSTANS, Christian, 68150 WALTENHEIM (FR)
(74) Mandataire: Cabinet Bleger-Rhein-Poupon

(56) Documents cités:
- WO-A1-2010/043801
- CN-A- 112 045 581
- KR-B1- 102 115 777

## Description

L'invention concerne un dispositif de mise à la terre d'au moins un conducteur électrique d'une ligne électrique aérienne.

Cette invention concerne le domaine de la fabrication des dispositifs utilisés dans le cadre de la maintenance des installations électriques, plus particulièrement le domaine de la fabrication des dispositifs conçus pour assurer la mise à la terre des conducteurs électriques que comporte une ligne électrique aérienne de moyenne ou de haute tension.

Le document WO2010/043801A1 divulgue un dispositif similaire dans lequel les moyens de commande ne communiquent pas d'informations à la pince de mise à la terre et à la pince qui se fixe sur le câble haute tension. Les moyens de commande de l'art antérieur permettent d'appliquer d'abord une force mécanique à la pince de mise à la terre en y insérant une clé. On retire ensuite la clé et on l'insère dans la pince pour permettre de la manoeuvrer. Le document CN112045581A divulgue une canne chauffante avec une pince et une télécommande pour commander à distance la pince. Le circuit de commande de la pince est connecté sans fil à la télécommande. Le document KR102115777B1 divulgue un dispositif et une méthode pour assurer la continuité du service pendant la réparation d'une ligne à haute tension. Le dispositif utilise une perche pour fixer un serre-câble motorisé à une ligne haute tension sous tension. Le serre-câble motorisé est d'abord fixé à la ligne haute tension et il est doté d'un contrôleur qui enroule et déroule une courroie utilisée pour fixer un câble de dérivation à la ligne haute tension. Par le document EP2347471, on connait un dispositif de mise à la terre qui comporte un étau comportant, d'une part, des moyens de serrage de cet étau sur un élément à la terre, d'autre part, des moyens de manoeuvre de ces moyens de serrage et, d'autre part encore, des moyens de verrouillage des moyens de manoeuvre dans une position inactive de manoeuvre. Un tel dispositif de mise à la terre comporte, encore, une pince comportant, d'une part, des moyens de serrage d'une telle pince sur un conducteur électrique, d'autre part, des moyens de manoeuvre de ces moyens de serrage et, d'autre part encore, des moyens de verrouillage des moyens de manoeuvre dans une position inactive de manoeuvre. Un tel dispositif de mise à la terre comporte, aussi, un câble électrique de raccordement dudit étau à ladite pince. Finalement, un tel dispositif de mise à la terre comporte une clé amovible qui commande, de manière séparée et successive, d'une part, le verrouillage des moyens de verrouillage des moyens de manoeuvre de l'étau en position de serrage sur l'élément de mise à la terre et le déverrouillage des moyens de verrouillage des moyens de manoeuvre de la pince et, d'autre part, le verrouillage des moyens de verrouillage des moyens de manoeuvre de la pince en position de serrage à vide et le déverrouillage des moyens de verrouillage des moyens de manoeuvre de l'étau.

On observera que ce dispositif comporte, alors, une clé amovible unique qui est configurée pour commander, de manière séparée et successive, un étau et une unique pince. Un tel dispositif n'est, donc, pas adapté pour mettre à la terre une pluralité de conducteurs électriques que comporte une ligne aérienne. Aussi, pour mettre à la terre une telle ligne aérienne, il est nécessaire de prévoir autant de dispositifs de mise à la terre que de conducteurs électriques que comporte cette ligne aérienne.

Un autre inconvénient consiste en ce que, en cas de perte de la clé amovible, le dispositif de mise à la terre devient totalement et définitivement inutilisable.

La présente invention se veut de remédier aux inconvénients des dispositif de mise à la terre d'une ligne électrique aérienne de l'état de la technique.

A cet effet, l'invention concerne un dispositif de mise à la terre d'au moins un conducteur électrique d'une ligne électrique aérienne. Ce dispositif comporte :
- au moins un étau qui comporte, chacun, d'une part, des moyens de serrage, qui sont configurés pour serrer un tel étau sur un élément relié à la terre, et qui adoptent une position active de serrage et une position inactive de serrage d'un tel étau sur ledit élément relié à la terre, d'autre part, des moyens de manoeuvre qui sont configurés pour manoeuvrer les moyens de serrage entre la position active et la position inactive de serrage d'un tel étau et, d'autre part encore, des moyens de verrouillage, qui sont configurés pour verrouiller les moyens de manoeuvre dans une position inactive de manoeuvre, et qui adoptent une position active de verrouillage et une position inactive de verrouillage de ces moyens de manoeuvre ;
- au moins une pince qui comporte, chacune, d'une part, des moyens de serrage, qui sont configurés pour serrer une telle pince sur le conducteur électrique ou sur l'un des conducteurs électriques, et qui adoptent une position active de serrage et une position inactive de serrage d'une telle pince sur un tel conducteur électrique, d'autre part, des moyens de manoeuvre qui sont configurés pour manoeuvrer les moyens de serrage entre la position active et la position inactive de serrage d'une telle pince et, d'autre part encore, des moyens de verrouillage, qui sont configurés pour verrouiller les moyens de manoeuvre dans une position inactive de manoeuvre, et qui adoptent une position active de verrouillage et une position inactive de verrouillage de ces moyens de manoeuvre ;
- des moyens de commande, qui sont amovibles, et qui sont configurés pour commander les moyens de verrouillage que comporte ledit au moins un étau ainsi que les moyens de verrouillage que comporte ladite au moins une pince ;
- au moins un câble électrique qui est configuré, chacun, pour raccorder ledit au moins un étau à l'une desdites pinces.

Ce dispositif de mise à la terre est caractérisé par le fait que :
- il comporte des moyens de communication qui sont configurés pour communiquer des données entre, d'une part, les moyens de commande et, d'autre part, les moyens de verrouillage que comporte ledit au moins un étau et les moyens de verrouillage que comporte ladite au moins une pince ;
- les moyens de commande sont configurés pour commander les moyens de verrouillage que comporte ledit au moins un étau et les moyens de verrouillage que comporte ladite au moins une pince, ceci en fonction des données communiquées entre, d'une part, ces moyens de commande et, d'autre part, ces moyens de verrouillage que comporte ledit au moins un étau et ces moyens de verrouillage que comporte ladite au moins une pince.

Selon une autre caractéristique, les moyens de verrouillage comportent, d'une part, un organe de verrouillage qui adopte une position active de verrouillage et une position inactive de verrouillage des moyens de manoeuvre, d'autre part, des moyens de positionnement qui sont configurés pour positionner ledit organe de verrouillage dans la position active de verrouillage et dans la position inactive de verrouillage et, d'autre part encore, des moyens d'actionnement qui sont configurés pour actionner ces moyens de positionnement, ceci sous l'impulsion des moyens de commande.

Encore une autre caractéristique consiste en ce que les moyens de verrouillage que comporte ledit au moins un étau, respectivement les moyens de verrouillage que comporte ladite au moins une pince, comportent des moyens d'identification qui identifient ledit au moins un étau, respectivement qui identifient ladite au moins une pince, qui comporte ces moyens de verrouillage.

Selon une autre caractéristique, les moyens de verrouillage que comporte ledit au moins un étau, respectivement les moyens de verrouillage que comporte ladite au moins une pince, comportent des moyens de détection qui sont configurés pour détecter la position inactive ou la position active de verrouillage adoptée par les moyens de verrouillage que comporte ledit au moins un étau, respectivement que comporte ladite au moins une pince.

De plus, les moyens de communication sont configurés pour communiquer des données relatives aux moyens d'identification et/ou à des données détectées par les moyens de détection.

Selon une autre caractéristique, les moyens de commande comportent, d'une part, des moyens de collecte qui sont configurés pour collecter des données relatives audit moins un étau, respectivement des données relatives à ladite au moins une pince, d'autre part, des moyens d'analyse qui sont configurés pour analyser ces données collectées et, d'autre part encore, des moyens d'émission qui sont configurés pour émettre des données, qui sont fonction des données collectées et analysées, et qui sont configurées pour commander les moyens de verrouillage que comporte ladite au moins une pince, respectivement ledit au moins un étau.

Encore une autre caractéristique concerne le fait que les moyens de commande comportent des moyens de stockage d'énergie électrique.

Ainsi, le dispositif de mise à la terre conforme à l'invention comporte des moyens de communication de données (entre les moyens de verrouillage et les moyens de commande) tandis que les moyens de commande sont configurés pour commander les moyens de verrouillage (dudit au moins un étau et de ladite au moins une pince) en fonction des données communiquées (entre les moyens de commande et les moyens de verrouillage). Ces caractéristiques permettent, avantageusement, au dispositif de mise à la terre selon l'invention de comporter, d'une part, des moyens de commande qui s'apparentent à une clé électronique et, d'autre part, des moyens de verrouillage qui s'apparentent à une serrure électronique. Une telle clé électronique et de telles serrures électroniques permettent, avantageusement, de commander un dispositif de mise à la terre comportant un unique étau (voire une pluralité d'étaux) et une pluralité de pinces, notamment en associant électroniquement une telle clé électronique à un tel étau (voire une pluralité d'étaux, plus particulièrement à la serrure électronique d'un tel étau) et à une telle pluralité de pinces (plus particulièrement à une serrure électronique d'une telle pince) et en commandant successivement (et de manière électronique) un tel étau et une telle pince. Encore de manière avantageuse, en cas de perte d'une telle clé électronique, il est aisé de programmer une nouvelle clé électronique en vue du remplacement de la clé perdue. De plus, une telle clé électronique peut, avantageusement, être adaptée à n'importe quel dispositif de mise à la terre et/ou être reprogrammée.

D'autres caractéristiques et avantages de l'invention ressortiront de la description détaillée qui va suivre d'un mode de réalisation non limitatif de l'invention, en référence aux figures annexées dans lesquelles :
[Fig 1] représente une vue schématisée d'une ligne électrique aérienne et d'un dispositif de mise à la terre d'une telle ligne électrique aérienne, qui est conforme à l'invention, et qui est configuré pour mettre à la terre les conducteurs électriques de cette ligne électrique aérienne ;

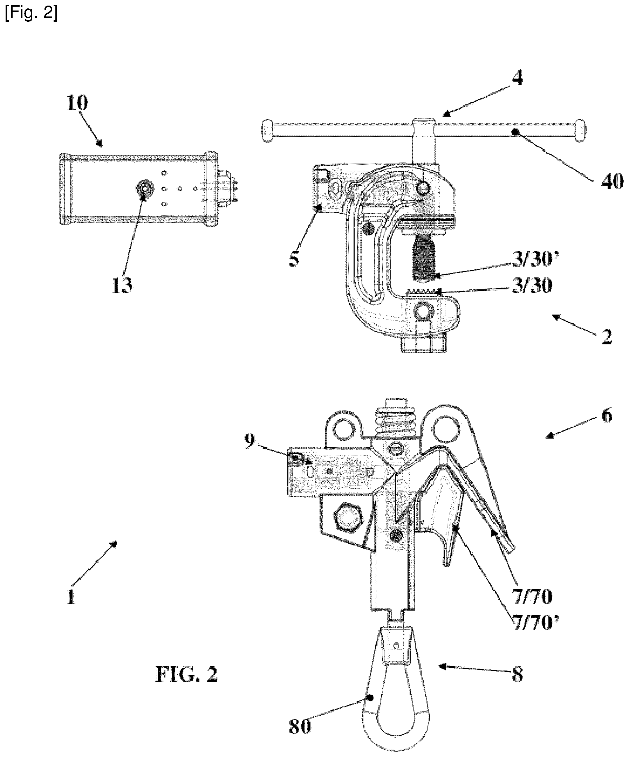

[Fig 2] représente une vue schématisée d'un dispositif de mise à la terre, qui est conforme à l'invention, et qui comporte un étau, au moins une pince et des moyens de commande ;
[Fig 3] représente une vue schématisée et en coupe de l'étau du dispositif de mise à la terre illustré figure 2, ceci en position active de verrouillage des moyens de verrouillage ;
[Fig 4] représente une vue schématisée et en coupe de l'étau et des moyens de commande que comporte le dispositif de mise à la terre illustré figure 2, ceci en position inactive de verrouillage des moyens de verrouillage ;
[Fig 5] représente une vue schématisée, en coupe, et en détail des moyens de verrouillage que comporte l'étau illustré figures 3 et 4 ;
[Fig 6] représente une vue schématisée et en coupe de la pince du dispositif de mise à la terre illustré figure 2, ceci en position active de verrouillage des moyens de verrouillage ;
[Fig 7] représente une vue schématisée et en coupe de la pince et des moyens de commande du dispositif de mise à la terre illustré figure 2, ceci en position inactive de verrouillage des moyens de verrouillage ;
[Fig 8] représente une vue schématisée, en coupe et en détail des moyens de verrouillage que comporte ladite au moins une pince illustrée figure 6 et 7.

En référence notamment aux figures susmentionnées, la présente invention concerne le domaine de la fabrication des dispositifs utilisés dans le cadre de la maintenance des installations électriques, plus particulièrement le domaine de la fabrication des dispositifs conçus pour assurer la mise à la terre des conducteurs électriques que comporte une ligne électrique aérienne de moyenne ou de haute tension.

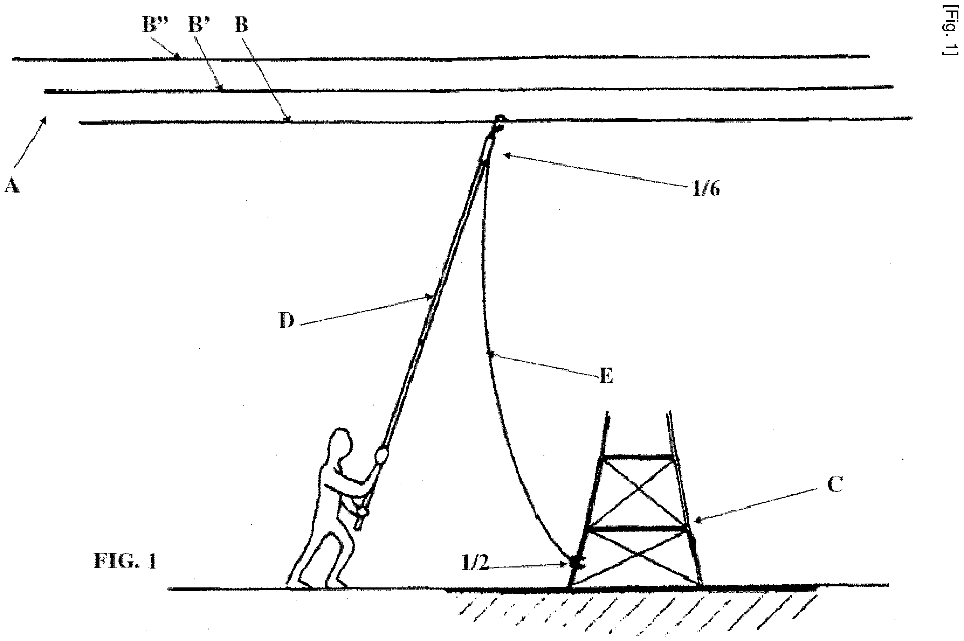

Tel que visible sur la figure 1 en annexe, une telle ligne électrique aérienne A (de moyenne ou de haute tension) comporte une pluralité de conducteurs électriques (B ; B' ; B").

L'invention concerne, alors, plus particulièrement, un dispositif de mise à la terre 1 d'une telle ligne électrique aérienne A.

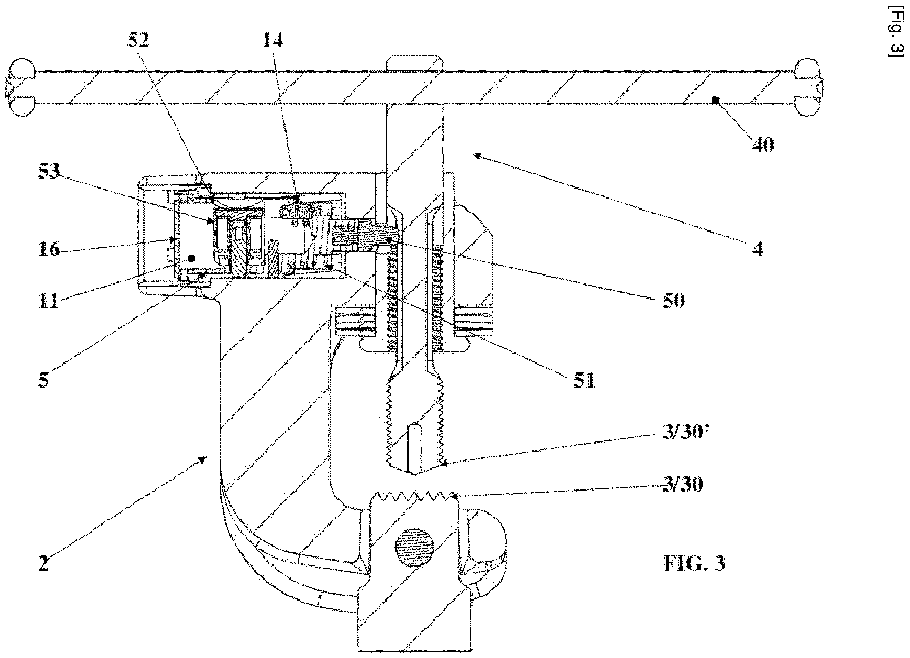

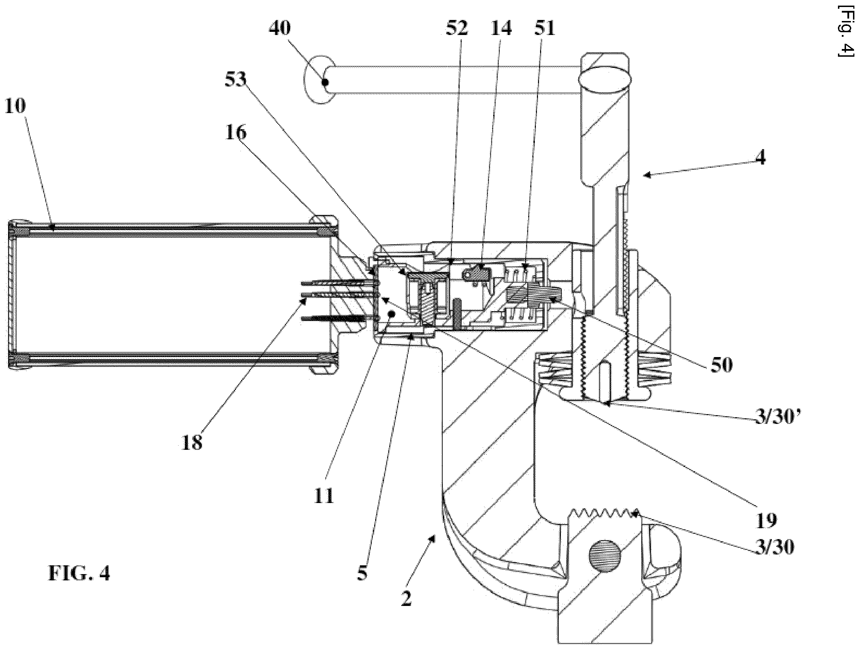

Un tel dispositif de mise à la terre 1 comporte au moins un étau 2 qui comporte, chacun, d'une part, des moyens de serrage 3, qui sont configurés pour serrer un tel étau 2 sur un élément relié à la terre C, et qui adoptent une position active de serrage (figure 3) et une position inactive de serrage (figure 4) d'un tel étau 2 sur ledit élément relié à la terre C (plus particulièrement une position active/inactive de serrage, par ces moyens de serrage 3 que comporte un tel étau 2, d'un tel étau 2 sur ledit élément relié à la terre C). De tels moyens de serrage 3 peuvent être constitués, d'une part, par un mors fixe 30 que comporte un tel étau 2 et, d'autre part, par un mors mobile 30' que comporte un tel étau 2.

D'autre part, cet étau 2 comporte des moyens de manoeuvre 4 qui sont configurés pour manoeuvrer les moyens de serrage 3 entre la position active (figure 3) et la position inactive (figure 4) de serrage d'un tel étau 2 sur ledit élément relié à la terre C (plus particulièrement entre les positions active/inactive de serrage, par ces moyens de serrage 3 que comporte un tel étau 2, d'un tel étau 2 sur l'élément relié à la terre C). De tels moyens de manoeuvre 4 peuvent comporter une poignée de manoeuvre 40.

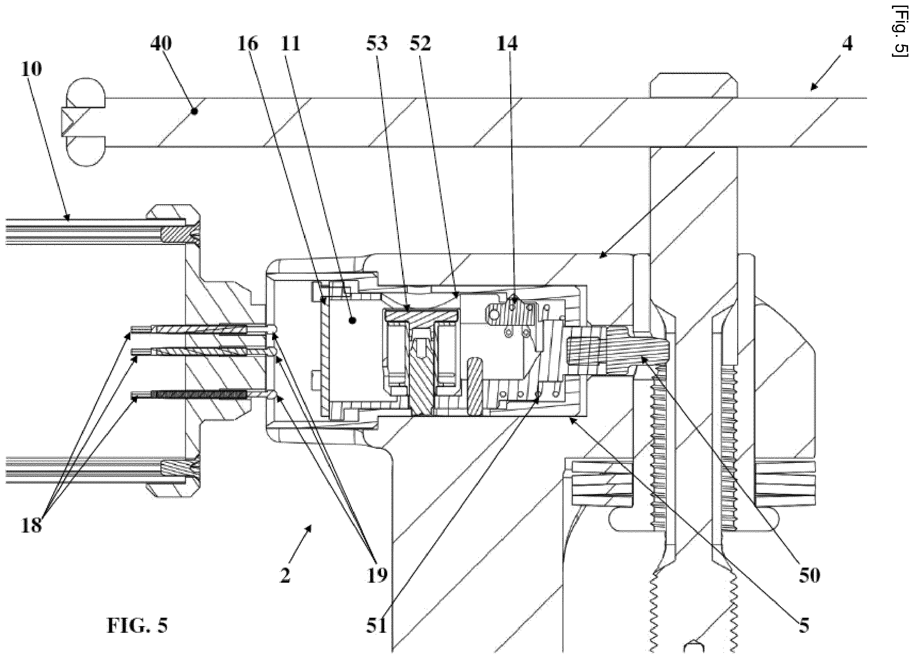

D'autre part encore, un tel étau 2 comporte des moyens de verrouillage 5, qui sont configurés pour verrouiller les moyens de manoeuvre 4 dans une position inactive de manoeuvre (figures 3 et 5), c'est-à-dire dans une position dans laquelle il n'est pas possible de manoeuvrer ces moyens de manoeuvre 4.

Ces moyens de verrouillage 5 adoptent une position active de verrouillage (figures 3 et 5) et une position inactive de verrouillage (figure 4) de ces moyens de manoeuvre 4. A ce propos, on observera que ces moyens de verrouillage 5 sont, plus particulièrement, configurés pour adopter une position active de verrouillage de ces moyens de manoeuvre 4, ceci dans la position inactive de manoeuvre de ces moyens de manoeuvre 4 (figures 3 et 5).

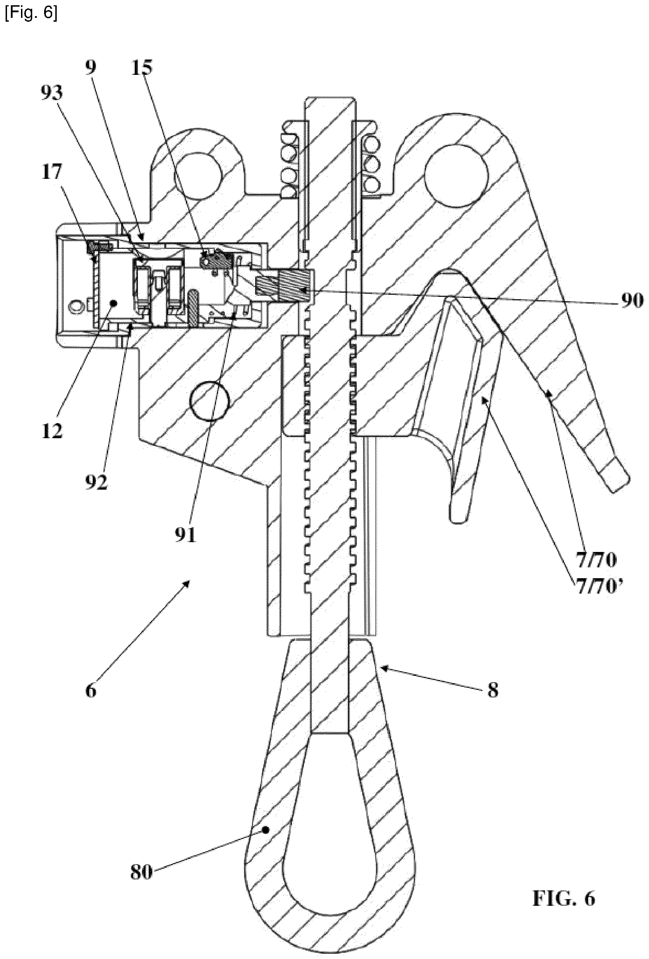

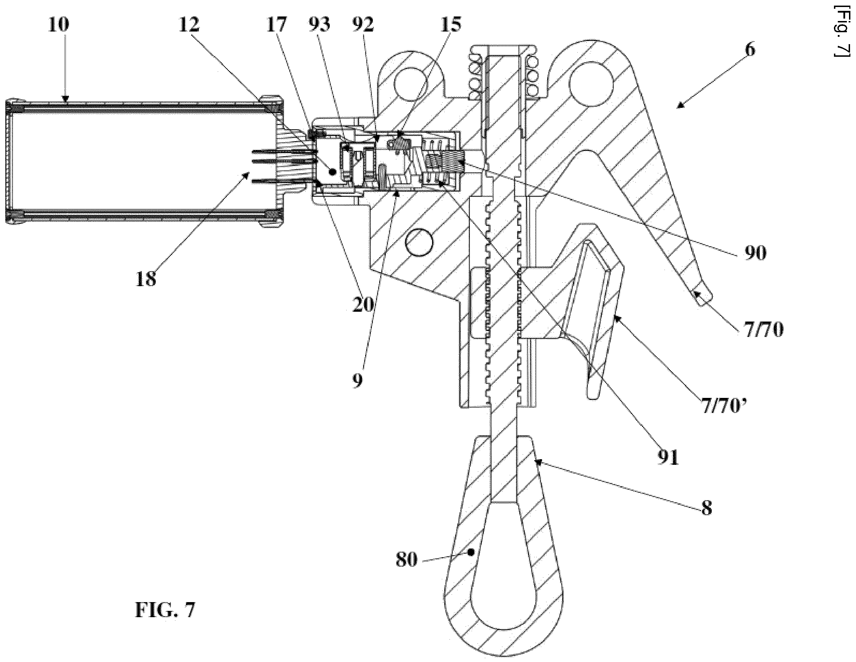

Ledit dispositif de mise à la terre 1 comporte, encore, au moins une pince 6 qui comporte, chacune, d'une part, des moyens de serrage 7, qui sont configurés pour serrer une telle pince 6 sur le conducteur électrique (B ; B' ; B") ou sur l'un des conducteurs électriques (B ; B' ; B") de la ligne électrique aérienne A, et qui adoptent une position active de serrage (figure 6) et une position inactive de serrage (figure 7) d'une telle pince 6 sur un tel conducteur électrique (B ; B' ; B"), plus particulièrement une position active/inactive de serrage, par ces moyens de serrage 7 que comporte une telle pince 6, d'une telle pince 6 sur un tel conducteur électrique (B ; B' ; B"). De tels moyens de serrage 7 peuvent être constitués, d'une part, par un mors fixe 70 que comporte une telle pince 6 et, d'autre part, par un mors mobile 70' que comporte une telle pince 6.

D'autre part, ladite au moins une pince 6 comporte, chacune, des moyens de manoeuvre 8 qui sont configurés pour manoeuvrer les moyens de serrage 7 entre la position active (figure 6) et la position inactive (figure 7) de serrage d'une telle pince 6 sur un tel conducteur électrique (B ; B' ; B"), plus particulièrement entre les positions active/inactive de serrage, par ces moyens de serrage 7 que comporte une telle pince 6, d'une telle pince 6 sur un tel conducteur électrique (B ; B' ; B"). De tels moyens de manoeuvre 8 peuvent comporter un organe de manoeuvre 80 (notamment sous la forme d'une boucle ou d'un anneau) configuré pour coopérer avec un crochet que comporte une perche D (plus particulièrement à son extrémité distale) qui est manipulée par un opérateur.

D'autre part encore, ladite au moins une pince 6 comporte, chacune, des moyens de verrouillage 9 qui sont configurés pour verrouiller les moyens de manoeuvre 8 dans une position inactive de manoeuvre (figure 6), c'est-à-dire dans une position dans laquelle il n'est pas possible de manoeuvrer ces moyens de manoeuvre 8.

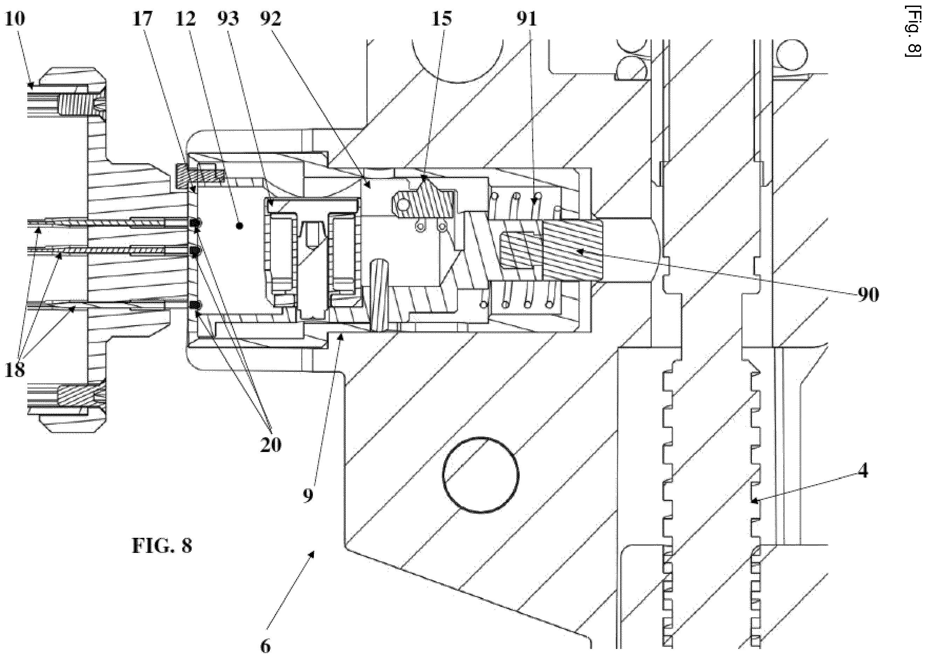

Ces moyens de verrouillage 9 adoptent une position active de verrouillage (figure 6) et une position inactive de verrouillage (figures 7 et 8) de ces moyens de manoeuvre 8. A ce propos, on observera que ces moyens de verrouillage 9 sont, plus particulièrement, configurés pour adopter une position active de verrouillage de ces moyens de manoeuvre 8, ceci dans la position inactive de manoeuvre de ces moyens de manoeuvre 8 (figure 6).

Le dispositif de mise à la terre 1 comporte, également, des moyens de commande 10, qui sont amovibles, et qui sont configurés pour commander (notamment de manière séparée et successive) les moyens de verrouillage 5 que comporte ledit au moins un étau 2 ainsi que les moyens de verrouillage 9 que comporte ladite au moins une pince 6.

Finalement, le dispositif de mise à la terre 1 comporte, aussi, au moins un câble électrique E qui est configuré, chacun, pour raccorder ledit au moins un étau 2 à l'une desdites pinces 6.

Selon l'invention, le dispositif de mise à la terre 1 comporte des moyens de communication (11 ; 12 ; 13) qui sont configurés pour communiquer des données entre, d'une part, les moyens de commande 10 et, d'autre part, les moyens de verrouillage 5 que comporte ledit au moins un étau 2 et les moyens de verrouillage 9 que comporte ladite au moins une pince 6.

Ces moyens de communication (11 ; 12 ; 13) sont, alors, plus particulièrement configurés pour communiquer des données, d'une part, entre les moyens de commande 10 et les moyens de verrouillage 5 que comporte ledit au moins un étau 2 et, d'autre part, entre les moyens de commande 10 et les moyens de verrouillage 9 que comporte ladite au moins une pince 6.

Egalement selon l'invention, les moyens de commande 10 sont, alors, configurés pour commander les moyens de verrouillage 5 que comporte ledit au moins un étau 2 et les moyens de verrouillage 9 que comporte ladite au moins une pince 6, ceci en fonction des données communiquées (par l'intermédiaire des moyens de communication 11 ; 12 ; 13) entre, d'une part, ces moyens de commande 10 et, d'autre part, ces moyens de verrouillage 5 que comporte ledit au moins un étau 2 et ces moyens de verrouillage 9 que comporte ladite au moins une pince 6.

A ce propos, on observera que ces moyens de commande 10 sont, alors, plus particulièrement configurés pour commander les moyens de verrouillage 5 que comporte ledit au moins un étau 2 en fonction des données communiquées (par l'intermédiaire des moyens de communication 11 ; 12 ; 13) entre les moyens de commande 10 et au moins les moyens de verrouillage 9 que comporte ladite au moins une pince 6, voire encore entre les moyens de commande 10 et les moyens de verrouillage 5 que comporte ledit au moins un étau 2, ceci comme il sera décrit plus en détail ci-dessous.

De manière alternative ou (et de préférence) additionnelle, ces moyens de commande 10 sont, alors, plus particulièrement configurés pour commander les moyens de verrouillage 9 que comporte ladite au moins une pince 6 en fonction des données communiquées (par l'intermédiaire des moyens de communication 11 ; 12 ; 13) entre les moyens de commande 10 et au moins les moyens de verrouillage 5 que comporte ledit au moins un étau 2 voire encore entre les moyens de commande 10 et les moyens de verrouillage 9 que comporte ladite au moins une pince 6 ceci comme il sera décrit plus en détail ci-dessous.

Tel que mentionné ci-dessus, ledit au moins un étau 2 ainsi que ladite au moins une pince 6 comportent, chacun, des moyens de verrouillage (5 ; 9).

Ces moyens de verrouillage (5 ; 9) comportent, alors, d'une part, un organe de verrouillage (50 ; 90) qui adopte une position active de verrouillage (figures 3, 5, 6) et une position inactive (figures 4, 7, 8) de verrouillage des moyens de manoeuvre (4 ; 8). Un tel organe de verrouillage (50 ; 90) peut adopter la forme d'un plot ou d'un téton de verrouillage.

D'autre part, ces moyens de verrouillage (5 ; 9) comportent des moyens de positionnement (51, 52 ; 91, 92) qui sont configurés pour positionner ledit organe de verrouillage (50 ; 90) dans la position active de verrouillage ainsi que dans la position inactive de verrouillage.

De tels moyens de positionnement (51, 52 ; 91, 92) peuvent, alors, comporter, d'une part, des moyens de rappel (51 ; 91) qui sont configurés pour positionner (plus particulièrement pour rappeler) ledit organe de verrouillage (50 ; 90) dans la position active ou (et de préférence) dans la position inactive de verrouillage. Ces moyens de rappel (51 ; 91) peuvent adopter la forme d'un ressort de rappel ou analogue.

D'autre part, de tels moyens de positionnement (51, 52 ; 91, 92) peuvent comporter des moyens d'entraînement (52 ; 92) qui sont configurés pour positionner (plus particulièrement pour entraîner) ledit organe de verrouillage (50 ; 90) dans la position inactive ou (et de préférence) dans la position active de verrouillage. Ces moyens d'entraînement (52 ; 92) peuvent adopter la forme d'un chariot, qui est solidaire en déplacement dudit organe de verrouillage (50 ; 90), et qui est monté de manière mobile à l'intérieur d'un corps que comporte, selon le cas, ledit au moins un étau 2 ou ladite au moins une pince 6. Ces moyens d'entraînement (52 ; 92) peuvent être configurés pour agir à l'encontre de l'action des moyens de rappel (51 ; 91). Ces moyens d'entraînement (52 ; 92) peuvent, également, être configurés pour être actionnés par les moyens de commande 10 (notamment par un engagement d'au moins une partie de ces moyens de commande 10 à l'intérieur dudit au moins un étau 2 ou à l'intérieur de ladite au moins une pince 6) ou, encore, par un opérateur (notamment de manière manuelle ou digitale, voire par l'intermédiaire d'un outil), ceci pour amener ledit organe de verrouillage (50 ; 90) dans la position inactive ou (et de préférence) dans la position active de verrouillage.

D'autre part encore, lesdits moyens de verrouillage (5 ; 9) comportent des moyens d'actionnement (53 ; 93) qui sont configurés pour actionner, sous l'impulsion des moyens de commande 10, lesdits moyens de positionnement (51, 52 ; 91, 92), plus particulièrement les moyens de rappel (51 ; 91) que comportent ces moyens de positionnement (51, 52 ; 91, 92).

Ces moyens d'actionnement (53 ; 93) peuvent comporter, d'une part, des moyens de maintien dudit organe de verrouillage (50 ; 90) dans la position inactive de verrouillage ou (et de préférence) active de verrouillage et, d'autre part, des moyens de commande qui sont configurés pour commander ces moyens de maintien.

De tels moyens de maintien peuvent comporter un plot qui est mobile entre, d'une part, une position déployée dans laquelle ce plot coopère avec une gâche que comporte le corps dudit au moins un étau 2 ou de ladite au moins une pince 6, ceci pour maintenir ledit organe de verrouillage (50 ; 90) dans la position inactive ou (et de préférence) active de verrouillage et, d'autre part, une position escamotée dans laquelle le plot ne coopère pas avec ladite gâche et libère ledit organe de verrouillage (50 ; 90) qui est, alors, soumis à l'action des moyens de rappel (51 ; 91) qui positionnent ledit organe de verrouillage (50 ; 90) dans la position active ou (et de préférence) inactive de verrouillage. De tels moyens de maintien peuvent, également, comporter, d'une part, un ressort qui repousse le plot en position déployée (respectivement qui entraîne le plot en position escamotée) et, d'autre part, un électroaimant qui entraîne le plot en position escamotée (respectivement qui repousse le plot en position déployée), ceci à l'encontre de l'action du ressort. Les moyens de commande sont, alors, configurés pour commander un tel électroaimant.

Les moyens de positionnement (51, 52 ; 91 ; 92) peuvent, alors, être configurés, d'une part, pour positionner (plus particulièrement pour entraîner par l'intermédiaire des moyens d'entraînement 52 ; 92) ledit organe de verrouillage (50 ; 90) dans la position active de verrouillage lorsque les moyens d'entraînement (52 ; 92) sont actionnés, plus particulièrement par les moyens de commande 10 ou par un opérateur. D'autre part, ces moyens de positionnement (51, 52 ; 91 ; 92) peuvent être configurés pour positionner (plus particulièrement pour rappeler par l'intermédiaire des moyens de rappel 51 ; 91) ledit organe de verrouillage (50 ; 90) dans la position inactive de verrouillage lorsque les moyens de rappel (51 ; 91) sont actionnés par les moyens d'actionnement (53 ; 93), plus particulièrement par le plot et les moyens de commande que comportent ces moyens d'actionnement (53 ; 93).

Tel que mentionné ci-dessus, le dispositif de mise à la terre 1 comporte des moyens de communication (11 ; 12 ; 13) qui sont configurés pour communiquer des données entre, d'une part, les moyens de commande 10 et, d'autre part, les moyens de verrouillage 5 que comporte ledit au moins un étau 2 et les moyens de verrouillage 9 que comporte ladite au moins une pince 6.

A ce propos, on observera que les moyens de verrouillage 5, que comporte ledit au moins un étau 2, comportent une partie 11 des moyens de communication (11 ; 12 ; 13) que comporte le dispositif de mise à la terre 1.

De manière alternative ou (et de préférence) additionnelle, les moyens de verrouillage 9, que comporte ladite au moins une pince 6, comportent une autre partie 12 des moyens de communication (11 ; 12 ; 13) que comporte le dispositif de mise à la terre 1.

A ce propos, on observera que la partie 11 des moyens de communication (11 ; 12 ; 13) que comportent les moyens de verrouillage 5 dudit au moins un étau 2 comporte, d'une part, des moyens d'émission qui sont configurés pour émettre des données relatives audit au moins un étau 2 (notamment relatives aux moyens de verrouillage 5 que comporte un tel étau 2 comme il sera décrit plus en détail ci-dessous) et, d'autre part, des moyens de collecte qui sont configurés pour collecter des données qui sont configurées pour commander les moyens de verrouillage 5 que comporte ledit au moins un étau 2, ceci au moins en fonction des données relatives à ladite au moins une pince 6 (notamment relatives aux moyens de verrouillage 9 que comporte ladite au moins une pince 6 comme il sera décrit plus en détail ci-dessous). On observera que ces données collectées par ces moyens de collecte peuvent avoir été communiquées audit au moins un étau 2 (plus particulièrement aux moyens de verrouillage 5 dudit au moins un étau 2) par l'intermédiaire des moyens de commande 10, notamment par l'intermédiaire d'une partie 13 des moyens de communication (11 ; 12 ;13) que comportent ces moyens de commande 10 comme il sera décrit plus en détail ci-dessous.

De manière alternative ou (et de préférence) additionnelle, la partie 12 des moyens de communication (11 ; 12 ;13) que comportent les moyens de verrouillage 9 de ladite au moins une pince 6, comporte, d'une part, des moyens d'émission qui sont configurés pour émettre des données relatives à ladite au moins une pince 6 (notamment relatives aux moyens de verrouillage 9 que comporte ladite au moins une pince 6 comme il sera décrit plus en détail ci-dessous) et, d'autre part, des moyens de collecte qui sont configurés pour collecter des données qui sont configurées pour commander les moyens de verrouillage 9 que comporte ladite au moins une pince 6, ceci au moins en fonction des données relatives audit au moins un étau 2 (notamment relatives aux moyens de verrouillage 5 que comporte ledit au moins un étau 2 comme il sera décrit plus en détail ci-dessous). On observera que ces données collectées par ces moyens de collecte peuvent avoir été communiquées à ladite au moins une pince 6 (plus particulièrement aux moyens de verrouillage 9 de ladite au moins une pince 6) par l'intermédiaire des moyens de commande 10, notamment par l'intermédiaire d'une partie 13 des moyens de communication (11 ; 12 ;13) que comportent ces moyens de commande 10 comme il sera décrit plus en détail ci-dessous.

Une autre caractéristique du dispositif de mise à la terre 1 concerne le fait que les moyens de verrouillage 5, que comporte ledit au moins un étau 2, comportent des moyens d'identification qui identifient ledit au moins un étau 2 qui comporte ces moyens de verrouillage 5. De tels moyens d'identification peuvent être constitués par des moyens configurés pour conférer une identité numérique et/ou électronique audit au moins un étau 2.

De manière alternative ou (et de préférence) additionnelle, les moyens de verrouillage 9, que comporte ladite au moins une pince 6, comportent des moyens d'identification qui identifient ladite au moins une pince 6 qui comporte ces moyens de verrouillage 9. De tels moyens d'identification peuvent, là encore, être constitués par des moyens configurés pour conférer une identité numérique et/ou électronique à ladite au moins une pince 6.

Encore une autre caractéristique concerne le fait que les moyens de verrouillage 5, que comporte ledit au moins un étau 2, comportent des moyens de détection 14 qui sont configurés pour détecter la position inactive ou la position active de verrouillage adoptée par les moyens de verrouillage 5 que comporte ledit au moins un étau 2, plus particulièrement la position inactive ou la position active de verrouillage adoptée par l'organe de verrouillage 50 que comportent ces moyens de verrouillage 5.

De manière alternative ou (et de préférence) additionnelle, les moyens de verrouillage 9, que comporte ladite au moins une pince 6, comportent des moyens de détection 15 qui sont configurés pour détecter la position inactive ou la position active de verrouillage adoptée par les moyens de verrouillage 9 que comporte ladite au moins une pince 6, plus particulièrement la position inactive ou la position active de verrouillage adoptée par l'organe de verrouillage 90 que comportent ces moyens de verrouillage 9.

De tels moyens de détection (14 ; 15) peuvent adopter la forme d'un capteur de position ou analogue.

A ce propos, on observera que les moyens de communication (11 ; 12 ; 13) sont, alors, configurés pour communiquer des données relatives aux moyens d'identification (qui identifient ledit au moins un étau 2 ou ladite au moins une pince 6) et/ou à des données détectées par les moyens de détection (14 ; 15), plus particulièrement à des données détectées et relatives à la position inactive ou à la position active des moyens de verrouillage 5 dudit au moins un étau 2 et/ou à des données détectées et relatives à la position inactive ou à la position active des moyens de verrouillage 9 de ladite au moins une pince 2.

En fait, ce sont, plus particulièrement les parties (11 ; 12) des moyens de communication (11 ; 12 ; 13) que comportent les moyens de verrouillage (5 ; 9) - plus particulièrement les moyens d'émission que comportent ces parties (11 ; 12) des moyens de communication (11 ; 12 ; 13) - qui sont configurées pour communiquer de telles données.

Encore une autre caractéristique concerne le fait que les moyens de verrouillage 5 (que comporte ledit au moins un étau 2) comportent au moins une carte électronique 16 qui comporte au moins une partie des moyens d'actionnement 53 (plus particulièrement les moyens de commande que comportent ces moyens d'actionnement 53) et/ou qui comporte ladite partie 11 des moyens de communication 11 ; 12 ; 13 (que comportent ces moyens de verrouillage 5) et/ou qui comporte les moyens d'identification (que comportent ces moyens de verrouillage 5).

De manière alternative ou (et de préférence) additionnelle, les moyens de verrouillage 9 (que comporte ladite au moins une pince 6) comportent au moins une carte électronique 17 qui comporte au moins une partie des moyens d'actionnement 93 (plus particulièrement les moyens de commande que comportent ces moyens d'actionnement 93) et/ou qui comporte ladite partie 12 des moyens de communication 11 ; 12 ; 13 (que comportent ces moyens de verrouillage 9) et/ou qui comporte les moyens d'identification (que comportent ces moyens de verrouillage 9).

Tel que mentionné ci-dessus, le dispositif de mise à la terre 1 comporte des moyens de commande 10.

Ces moyens de commande 10 comportent, alors, une partie 13 des moyens de communication (11 ; 12 ; 13) que comporte le dispositif de mise à la terre 1, plus particulièrement une autre partie 13 de ces moyens de communication (11 ; 12 ; 13) que celles (11 ; 12) que comportent les moyens de verrouillage (5 ; 9).

A ce propos, il convient d'observer que la partie 13 des moyens de communication (11 ; 12 ; 13), que comportent les moyens de commande 10, comporte, d'une part, des moyens de collecte qui sont configurés pour collecter des données relatives audit au moins un étau 2 (plus particulièrement des données relatives aux moyens d'identification dudit au moins un étau 2 et/ou relatives aux moyens de verrouillage 5 que comporte ledit au moins un étau 2, notamment relatives à la position inactive ou active de verrouillage de ces moyens de verrouillage 5) et, d'autre part, des moyens d'émission qui sont configurés pour émettre des données, qui sont fonction des données collectées (par lesdits moyens de collecte que comporte cette partie 13 des moyens de communication 11 ;12 ; 13), et qui sont configurées pour commander les moyens de verrouillage 9 (plus particulièrement les moyens d'actionnement 93) que comporte ladite au moins une pince 6, ceci en fonction des données collectées (par les moyens de collecte susmentionnés) et relatives audit au moins un étau 2 (en particulier tel que susmentionné).

De manière alternative ou (et de préférence) additionnelle, cette partie 13 des moyens de communication (11 ; 12 ; 13), que comportent les moyens de commande 10, comporte, d'une part, des moyens de collecte qui sont configurés pour collecter des données relatives à ladite au moins une pince 6 (plus particulièrement des données relatives aux moyens d'identification de ladite au moins une pince 6 et/ou relatives aux moyens de verrouillage 9 que comporte ladite au moins une pince 6, notamment relatives à la position inactive ou active de verrouillage de ces moyens de verrouillage 9) et, d'autre part, des moyens d'émission qui sont configurés pour émettre des données, qui sont fonction des données collectées (par lesdits moyens de collecte que comporte cette partie 13 des moyens de communication 11 ;12 ; 13), et qui sont configurées pour commander les moyens de verrouillage 5 (plus particulièrement les moyens d'actionnement 53) que comporte ledit au moins un étau 2, ceci en fonction des données collectées (par les moyens de collecte susmentionnés) et relatives à ladite au moins un pince 6 (en particulier tel que susmentionné).

Selon une autre caractéristique, les moyens de commande 10 (plus particulièrement la partie 13 des moyens de communication 11 ; 12 ; 13 que comportent ces moyens de commande 10) comportent, d'une part, des moyens de collecte (qui correspondent, de préférence, aux moyens de collecte susmentionnés) qui sont configurés pour collecter des données relatives audit au moins un étau 2 (plus particulièrement des données relatives aux moyens d'identification dudit au moins un étau 2 et/ou relatives aux moyens de verrouillage 5 que comporte ledit au moins un étau 2, notamment relatives à la position inactive ou active de verrouillage de ces moyens de verrouillage 5), respectivement pour collecter des données relatives à ladite au moins une pince 6 (plus particulièrement des données relatives aux moyens d'identification de ladite au moins une pince 6 et/ou relatives aux moyens de verrouillage 9 que comporte ladite au moins une pince 6, notamment relatives à la position inactive ou active de verrouillage de ces moyens de verrouillage 9).

A ce propos, on observera que les données collectées (par les moyens de collecte que comportent les moyens de commande 10, plus particulièrement que comporte la partie 13 des moyens de communication 11 ; 12 ; 13 que comportent ces moyens de commande 10) relatives audit au moins un étau 2 (et conformes aux données décrites ci-dessus) correspondent, plus particulièrement, à des données qui ont été communiquées aux moyens de commande 10 (plus particulièrement à la partie 13 des moyens de communication 11 ; 12 ; 13 que comportent ces moyens de commande 10, notamment aux moyens de collecte de ces moyens de commande 10, plus particulièrement aux moyens de collecte de cette partie 13 des moyens de communication 11 ; 12 ; 13) par les moyens de verrouillage 5 que comporte ledit au moins un étau 2, plus particulièrement par la partie 11 des moyens de communication (11 ; 12 ; 13) [plus particulièrement par les moyens d'émission que comporte ladite partie 11 des moyens de communication (11 ; 12 ; 13)] que comportent les moyens de verrouillage 5 dudit au moins un étau 2.

De manière alternative ou (et de préférence) additionnelle, les données collectées (par les moyens de collecte que comportent les moyens de commande 10, plus particulièrement que comporte la partie 13 des moyens de communication 11 ; 12 ; 13 que comportent ces moyens de commande 10) relatives à ladite au moins une pince 6 (et conformes aux données décrites ci-dessus), correspondent, plus particulièrement, à des données qui ont été communiquées aux moyens de commande 10 (plus particulièrement à la partie 13 des moyens de communication 11 ; 12 ; 13 que comportent ces moyens de commande 10, notamment aux moyens de collecte de ces moyens de commande 10, plus particulièrement aux moyens de collecte de cette partie 13 des moyens de communication 11 ; 12 ; 13) par les moyens de verrouillage 9 que comporte ladite au moins une pince 6, plus particulièrement par la partie 12 des moyens de communication (11 ; 12 ; 13) [plus particulièrement par les moyens d'émission que comporte ladite partie 12 des moyens de communication (11 ; 12 ; 13)] que comportent les moyens de verrouillage 9 de ladite au moins une pince 6.

D'autre part, ces moyens de commande 10 comportent, alors, des moyens d'analyse (plus particulièrement sous la forme d'un logiciel) qui sont configurés pour analyser ces données collectées, plus particulièrement les données collectées mentionnées ci-dessus et relatives audit au moins un étau 2 (plus particulièrement les données collectées relatives aux moyens d'identification de cet étau 2 et/ou relatives aux moyens de verrouillage 5 que comporte ledit au moins un étau 2) et/ou relatives à ladite au moins une pince 6 (plus particulièrement les données collectées relatives aux moyens d'identification de ladite au moins une pince 6 et/ou relatives aux moyens de verrouillage 9 que comporte ladite au moins une pince 6).

D'autre part encore, ces moyens de commande 10 (plus particulièrement la partie 13 des moyens de communication 11 ; 12 ; 13 que comportent ces moyens de commande 10) comportent des moyens d'émission (qui correspondent, de préférence, aux moyens d'émission susmentionnés) qui sont configurés pour émettre des données, qui sont fonction des données collectées (plus particulièrement par les moyens de collecte susmentionnés) et analysées (plus particulièrement par les moyens d'analyse susmentionnés), et qui sont configurées pour commander les moyens de verrouillage (9 ; 5) que comporte ladite au moins une pince 6, respectivement ledit au moins un étau 2, plus particulièrement en fonction des données collectées (voire encore, et de préférence, des données analysées) et relatives audit au moins un étau 2, respectivement à ladite au moins une pince 6.

Encore une autre caractéristique consiste en ce que les moyens de commande 10 peuvent comporter des moyens d'enregistrement de données qui sont configurés pour enregistrer des données (plus particulièrement des données collectées, voire encore des données analysées tel que décrit ci-dessus) relatives audit au moins un étau 2 (notamment relatives aux moyens d'identification dudit au moins un étau 2 et/ou aux moyens de verrouillage 5 que comporte ledit au moins un étau 2) et/ou des données relatives à ladite au moins une pince 6 (notamment aux moyens d'identification de ladite au moins une pince 6 et/ou aux moyens de verrouillage 9 que comporte ladite au moins une pince 6). De manière alternative ou (et de préférence) additionnelle, ces moyens d'enregistrement de données peuvent encore être configurés pour enregistrer des données (plus particulièrement qui sont fonction des données collectées et analysées tel que décrit ci-dessus) qui sont configurées pour commander les moyens de verrouillage 5 que comporte ledit au moins un étau 2 (plus particulièrement qui sont configurés pour commander les moyens d'actionnement 53 que comportent ces moyens de verrouillage 5) et/ou des données qui sont configurées pour commander les moyens de verrouillage 9 que comporte ladite au moins une pince 6 (plus particulièrement pour commander les moyens d'actionnement 93 que comportent ces moyens de verrouillage 9).

De tels moyens d'enregistrement de données peuvent adopter la forme d'une mémoire, plus particulièrement une mémoire morte (notamment une ROM) ou une mémoire vive (notamment une RAM) ou analogue.

Encore une autre caractéristique concerne le fait que le dispositif de mise à la terre 1 comporte des moyens de stockage d'énergie électrique.

A ce propos, on observera que ce sont les moyens de verrouillage (5 ; 9), que comportent ledit au moins un étau 2 et/ou ladite au moins une pince 6, qui peuvent, alors, comporter de tels moyens de stockage d'énergie électrique.

Cependant, de manière additionnelle ou (et de préférence) alternative, ce sont les moyens de commande 10 qui comportent de tels moyens de stockage d'énergie électrique.

De tels moyens de stockage d'énergie électrique sont, plus particulièrement, constitués par une pile, une batterie ou analogue.

Ces moyens de stockage d'énergie sont configurés pour alimenter en énergie électrique les moyens de verrouillage (5 ; 9), plus particulièrement la partie (11 ; 12) des moyens de communication (11 ; 12 ; 13), les moyens d'actionnement (53 ; 93) et/ou ladite au moins une carte électronique (16 ; 17).

De manière alternative ou (et de préférence) additionnelle, ces moyens de stockage d'énergie sont configurés pour alimenter en énergie électrique les moyens de commande 10, plus particulièrement la partie 13 des moyens de communication (11 ; 12 ; 13) et/ou les moyens d'analyse et/ou les moyens d'enregistrement de données.

Finalement, ces moyens de commande 10 peuvent, encore, comporter une interface homme-machine.

Une caractéristique additionnelle concerne le fait que, d'une part, les moyens de commande 10 comportent des moyens de connexion électrique 18 et, d'autre part, les moyens de verrouillage (5 ; 9), que comportent ledit au moins un étau 2 et ladite au moins une pince 6, comportent des moyens de connexion électrique complémentaires (19 ; 20) qui sont configurés pour coopérer avec les moyens de connexion électrique 18 que comportent les moyens de commande 10.

De tels moyens de connexion électrique 18 et de tels moyens de connexion électrique complémentaires (19 ; 20) peuvent être configurés pour alimenter les moyens de verrouillage (5 ; 9), que comportent ledit au moins un étau 2 et/ou ladite au moins une pince 6, en énergie électrique, ceci à partir des moyens de stockage d'énergie électrique que comportent les moyens de commande 10.

De manière alternative ou additionnelle, de tels moyens de connexion électrique 18 et de tels moyens de connexion électrique complémentaires (19 ; 20) peuvent être configurés pour transmettre des données relatives audit au moins un étau 2 (plus particulièrement des données relatives aux moyens d'identification dudit au moins un étau 2 et/ou relatives aux moyens de verrouillage 5 que comporte ledit au moins un étau 2, notamment relatives à la position inactive ou active de verrouillage de ces moyens de verrouillage 5, ceci tel que décrit ci-dessus) et/ou des données relatives à ladite au moins une pince 6 (plus particulièrement des données relatives aux moyens d'identification de ladite au moins une pince 6 et/ou relatives aux moyens de verrouillage 9 que comporte ladite au moins une pince 6, notamment relatives à la position inactive ou active de verrouillage de ces moyens de verrouillage 9, ceci tel que décrit ci-dessus) et/ou des données qui sont configurées pour commander les moyens de verrouillage 5 que comporte ledit au moins un étau 2 (plus particulièrement pour commander les moyens d'actionnement 53 que comportent ces moyens de verrouillage 5) et/ou des données qui sont configurées pour commander les moyens de verrouillage 9 que comporte ladite au moins une pince 6 (plus particulièrement pour commander les moyens d'actionnement 93 que comportent ces moyens de verrouillage 9).

A ce propos, on observera que ces données peuvent correspondre aux données qui ont été mentionnées ci-dessus et qui sont communiquées par les moyens de communication (11 ; 12 ; 13) mentionnés ci-dessus.

Finalement, ledit au moins un étau 2, ladite au moins une pince 6, et les moyens de verrouillage (5 ; 9) peuvent être configurés en sorte que ces moyens de verrouillage (5 ; 9) soient interchangeables.

L'invention concerne, également, un procédé pour mettre à la terre au moins un conducteur électrique (B ; B' ; B") que comporte une ligne électrique aérienne A.

Un tel procédé est, plus particulièrement, mis en oeuvre par l'intermédiaire du dispositif de mise à la terre 1 décrit ci-dessus.

Ce procédé consiste en ce qu'on communique des données entre, d'une part, des moyens de commande 10 que comporte ce dispositif de mise à la terre 1 et, d'autre part, des moyens de verrouillage 5 que comporte au moins un étau 2 (que comporte ce dispositif de mise à la terre 1) configuré pour être serré sur un élément de mise à la terre C et des moyens de verrouillage 9 que comporte au moins une pince 6 (que comporte ce dispositif de mise à la terre 1) qui est configurée pour être serrée sur ledit conducteur électrique (B ; B' ; B"), sur l'un des conducteurs électriques (B ; B' ; B") de la ligne électrique aérienne A ou, encore, sur un conducteur électrique intermédiaire (non représenté) qui est raccordé à un tel conducteur électrique (B ; B' ; B") et qui est configuré pour déplacer (notamment abaisser) ou protéger le point de serrage de ladite au moins une pince 6, ceci tel que décrit ci-dessus.

En fait, ce procédé consiste, plus particulièrement, en ce qu'on communique des données, d'une part, entre de tels moyens de commande 10 et de tels moyens de verrouillage 5 que comporte ledit au moins un étau 2 et, d'autre part, entre de tels moyens de commande 10 et de tels moyens de verrouillage 9 que comporte ladite au moins une pince 6, ceci tel que décrit ci-dessus.

Ce procédé consiste, ensuite, en ce qu'on commande les moyens de verrouillage 5 que comporte ledit au moins un étau 2 et les moyens de verrouillage 9 que comporte ladite au moins une pince 6, ceci en fonction des données communiquées (par l'intermédiaire de moyens de communication 11 ; 12 ; 13) entre, d'une part, ces moyens de commande 10 et, d'autre part, ces moyens de verrouillage 5 que comporte ledit au moins un étau 2 et ces moyens de verrouillage 9 que comporte ladite au moins une pince 6, plus particulièrement en fonction des données communiquées (par l'intermédiaire des moyens de communication 11 ; 12 ; 13), d'une part, entre ces moyens de commande 10 et ces moyens de verrouillage 5 que comporte ledit au moins un étau 2 et, d'autre part, entre ces moyens de commande 10 et ces moyens de verrouillage 9 que comporte ladite au moins une pince 6, ceci tel que décrit ci-dessus.

Ledit au moins un étau 2, les moyens de verrouillage 5 que comporte ledit au moins un étau 2, ladite au moins une pince 6, les moyens de verrouillage 9 que comporte ladite au moins une pince 6, les moyens de commande 10 et les moyens de communication (11 ; 12 ; 13) peuvent, alors, présenter les caractéristiques décrites ci-dessus et les caractéristiques de ces moyens (5 ; 9 ; 10) mentionnées ci-dessous peuvent être tels que décrits ci-dessus.

Ce procédé consiste, plus particulièrement, en ce qu'on procède au serrage de moyens de serrage 3 que comporte ledit au moins un étau 2 sur un élément de mise à la terre C, ceci en manoeuvrant des moyens de manoeuvre 4 (de ces moyens de serrage 3) que comporte ledit au moins un étau 2.

Après avoir serré les moyens de serrage 3 que comporte ledit au moins un étau 2 sur l'élément de mise à la terre C, on positionne les moyens de verrouillage 5 que comporte ledit au moins un étau 2 dans une position active de verrouillage (par ces moyens de verrouillage 5) des moyens de manoeuvre 4 (que comporte cet étau 2) dans une position inactive de manoeuvre.

A ce propos, on observera que, lorsqu'on positionne ces moyens de verrouillage 5 dans une position active de verrouillage des moyens de manoeuvre 4 (en position inactive de manoeuvre), on actionne des moyens de positionnement (51 ; 52) que comportent les moyens de verrouillage 5 (ceci par l'intermédiaire des moyens de commande 10 ou par l'intermédiaire d'un opérateur) et/ou on positionne un organe de verrouillage 50 (que comportent ces moyens de verrouillage 5) dans la position active de verrouillage de ces moyens de manoeuvre 4 (en position inactive de manoeuvre), ceci par l'intermédiaire de ces moyens de positionnement (51 ; 52).

On observera que, lorsqu'on actionne les moyens de positionnement (51 ; 52), on actionne de préférence des moyens d'entraînement 52 que comportent ces moyens de positionnement (51 ; 52), plus particulièrement à l'encontre de moyens de rappel 51 que comportent ces moyens de positionnement (51 ; 52).

Le procédé consiste, ensuite, en ce qu'on détecte la position (plus particulièrement la position active de verrouillage) des moyens de verrouillage 5 (plus particulièrement de l'organe de verrouillage 50), ceci par l'intermédiaire de moyens de détection 14 que comportent ces moyens de verrouillage 5.

Le procédé consiste, ensuite, en ce qu'on communique des données relatives à la position (notamment des données relatives à la position active de verrouillage, par les moyens de verrouillage 5, des moyens de manoeuvre 4 en position inactive de manoeuvre) des moyens de verrouillage 5 détectée par les moyens de détection 14, ceci par l'intermédiaire d'une partie 11 de moyens de communication (11 ; 12 ; 13) que comportent les moyens de verrouillage 5 que comporte ledit au moins un étau 2, plus particulièrement par l'intermédiaire de moyens d'émission que comporte cette partie 11 des moyens de communication (11 ; 12 ; 13).

De manière additionnelle, le procédé peut, encore, consister en ce qu'on communique des données relatives à l'identité dudit au moins un étau 2, plus particulièrement des données relatives à des moyens d'identification dudit au moins un étau 2, là encore par l'intermédiaire de ladite partie 11 des moyens de communication (11 ; 12 ; 13), plus particulièrement par l'intermédiaire desdits moyens d'émission susmentionnés.

En fait, on communique ces données (relatives à la position des moyens de verrouillage 5 dudit au moins un étau 2, voire à l'identité dudit au moins un étau 2) à une partie 13 des moyens de communication (11 ; 12 ; 13) que comportent les moyens de commande 10, plus particulièrement à des moyens de collecte que comportent ces moyens de commande 10.

On observera qu'on communique ces données lorsque les moyens de commande 10 sont associés (notamment physiquement) audit au moins un étau 2, plus particulièrement aux moyens de verrouillage 5 que comporte ledit au moins un étau 2, notamment après avoir associé (notamment physiquement) ces moyens de commande 10 audit au moins un étau 2, plus particulièrement aux moyens de verrouillage 5 dudit au moins un étau 2.

Le procédé consiste, alors, en ce qu'on analyse ces données (relatives à la position des moyens de verrouillage 5 dudit au moins un étau 2, voire à l'identité dudit au moins un étau 2) par l'intermédiaire des moyens d'analyse que comportent ces moyens de commande 10.

Le procédé consiste, ensuite, en ce qu'on communique des données configurées pour commander les moyens de verrouillage 9 que comporte ladite au moins une pince 6, ceci lorsque les données analysées correspondent à des données relatives à une position active de verrouillage (en position inactive de manoeuvre des moyens de manoeuvre 4 de l'étau 2) des moyens de verrouillage 5 dudit au moins un étau 2, voire encore à des données relatives à l'identité dudit au moins un étau 2.

En fait, de telles données de commande sont communiquées par l'intermédiaire de la partie 13 des moyens de communication (11 ; 12 ; 13) que comportent les moyens de commande 10, plus particulièrement par les moyens d'émission que comporte cette partie 13 de ces moyens de communication (11 ; 12 ; 13).

Ces données de commande sont communiquées aux moyens de verrouillage 9 que comporte ladite au moins une pince 6, plus particulièrement à une partie 12 des moyens de communication (11 ; 12 ; 13) que comportent ces moyens de verrouillage 9, plus spécifiquement aux moyens de collecte que comportent ces moyens de verrouillage 9.

On observera qu'on communique ces données de commande lorsque les moyens de commande 10 sont associés (notamment physiquement) à ladite au moins une pince 6, plus particulièrement aux moyens de verrouillage 9 que comporte une telle pince 6, notamment après avoir retiré (notamment physiquement) ces moyens de commande 10 dudit au moins un étau 2 et après les avoir associés (notamment physiquement) à une telle pince 6.

Le procédé consiste, alors, en ce qu'on positionne les moyens de verrouillage 9 que comporte ladite au moins une pince 6 (plus particulièrement un organe de verrouillage 90 que comportent ces moyens de verrouillage 9) dans une position inactive de verrouillage des moyens de manoeuvre 8 que comporte ladite au moins une pince 6. Dans cette position inactive de verrouillage des moyens de manoeuvre 8, ces moyens de manoeuvre 8 peuvent être manoeuvrés plus particulièrement en vue du serrage de ladite au moins une pince 6 sur un conducteur électrique (B ; B' ; B"), notamment par l'intermédiaire des moyens de serrage 7 que comporte ladite au moins une pince 6. Par un tel serrage, ledit conducteur électrique (B ; B' ; B") est mis à la terre.

En fait, lorsqu'on positionne ces moyens de verrouillage 9 dans cette position inactive de verrouillage des moyens de manoeuvre 8, on actionne les moyens de positionnement (91 ; 92) que comportent les moyens de verrouillage 9 de ladite au moins une pince 6 (et qui sont configurés pour positionner ledit organe de verrouillage 90 susmentionné), ceci par l'intermédiaire des moyens d'actionnement 93 que comportent ces moyens de verrouillage 9 et sous l'impulsion des données de commande collectées par les moyens de collecte que comportent les moyens de verrouillage 9.

En fait, lorsqu'on actionne ces moyens de positionnement (91 ; 92), on actionne plus particulièrement des moyens de rappel 91 que comportent ces moyens de positionnement (91 ; 92), ceci en commandant (par l'intermédiaire des moyens de commande que comportent les moyens d'actionnement 93) les moyens de maintien dudit organe de verrouillage 90 en position active de verrouillage.

## Revendications

1. Dispositif de mise à la terre (1) d'au moins un conducteur électrique (B ; B' ; B") d'une ligne électrique aérienne (A), ce dispositif (1) comporte :
- au moins un étau (2) qui comporte, chacun, d'une part, des moyens de serrage (3), qui sont configurés pour serrer un tel étau (2) sur un élément relié à la terre (C), et qui adoptent une position active de serrage et une position inactive de serrage d'un tel étau (2) sur ledit élément relié à la terre (C), d'autre part, des moyens de manoeuvre (4) qui sont configurés pour manoeuvrer les moyens de serrage (3) entre la position active et la position inactive de serrage d'un tel étau (2) et, d'autre part encore, des moyens de verrouillage (5), qui sont configurés pour verrouiller les moyens de manoeuvre (4) dans une position inactive de manoeuvre, et qui adoptent une position active de verrouillage et une position inactive de verrouillage de ces moyens de manoeuvre (4) ;
- au moins une pince (6) qui comporte, chacune, d'une part, des moyens de serrage (7), qui sont configurés pour serrer une telle pince (6) sur le conducteur électrique (B ; B' ; B") ou sur l'un des conducteurs électriques (B ; B ; B"), et qui adoptent une position active de serrage et une position inactive de serrage d'une telle pince (6) sur un tel conducteur électrique (B : B' ; B"), d'autre part, des moyens de manoeuvre (8) qui sont configurés pour manoeuvrer les moyens de serrage (7) entre la position active et la position inactive de serrage d'une telle pince (6) et, d'autre part encore, des moyens de verrouillage (9), qui sont configurés pour verrouiller les moyens de manoeuvre (8) dans une position inactive de manoeuvre, et qui adoptent une position active de verrouillage et une position inactive de verrouillage de ces moyens de manoeuvre (8) ;
- des moyens de commande (10), qui sont amovibles, et qui sont configurés pour commander les moyens de verrouillage (5) que comporte ledit au moins un étau (2) ainsi que les moyens de verrouillage (9) que comporte ladite au moins une pince (6) ;
- au moins un câble électrique (E) qui est configuré, chacun, pour raccorder ledit au moins un étau (2) à l'une desdites pinces (6) ;
- **caractérisé par le fait que** :
- le dispositif de mise à la terre (1) comporte des moyens de communication (11 ; 12 ; 13) qui sont configurés pour communiquer des données entre, d'une part, les moyens de commande (10) et, d'autre part, les moyens de verrouillage (5) que comporte ledit au moins un étau (2) et les moyens de verrouillage (9) que comporte ladite au moins une pince (6) ;
- les moyens de commande (10) sont configurés pour commander les moyens de verrouillage (5) que comporte ledit au moins un étau (2) et les moyens de verrouillage (9) que comporte ladite au moins une pince (6), ceci en fonction des données communiquées entre, d'une part, ces moyens de commande (10) et, d'autre part, ces moyens de verrouillage (5) que comporte ledit au moins un étau (2) et ces moyens de verrouillage (9) que comporte ladite au moins une pince (6).

2. Dispositif de mise à la terre (1) selon la revendication 1, **caractérisé par le fait que** les moyens de verrouillage (5 ; 9) comportent, d'une part, un organe de verrouillage (50 ; 90) qui adopte une position active de verrouillage et une position inactive de verrouillage des moyens de manoeuvre (4 ; 8), d'autre part, des moyens de positionnement (51, 52 ; 91, 92) qui sont configurés pour positionner ledit organe de verrouillage (50 ; 90) dans la position active de verrouillage et dans la position inactive de verrouillage et, d'autre part encore, des moyens d'actionnement (53 ; 93) qui sont configurés pour actionner ces moyens de positionnement (51, 52 ; 91, 92), ceci sous l'impulsion des moyens de commande (10).

3. Dispositif de mise à la terre (1) selon la revendication 2, **caractérisé par le fait que** les moyens de positionnement (51, 52 ; 91, 92) comportent, d'une part, des moyens de rappel (51 ; 91) dudit organe de verrouillage (50 ; 90) dans la position active, respectivement inactive, de verrouillage et, d'autre part, des moyens d'entraînement (52 ; 92) dudit organe de verrouillage (50 ; 90) dans la position inactive, respectivement active, de verrouillage.

4. Dispositif de mise à la terre (1) selon l'une quelconque des revendications 2 ou 3, **caractérisé par le fait que** les moyens d'actionnement (53 ; 93) comportent, d'une part, des moyens de maintien dudit organe de verrouillage (50 ; 90) dans la position inactive, respectivement active, de verrouillage et, d'autre part, des moyens de commande qui sont configurés pour commander ces moyens de maintien.

5. Dispositif de mise à la terre (1) selon l'une quelconque des revendications précédentes, **caractérisé par le fait que** les moyens de verrouillage (5), que comporte ledit au moins un étau (2), comportent une partie (11) des moyens de communication (11 ; 12 ; 13) que comporte le dispositif de mise à la terre (1) tandis que les moyens de verrouillage (9), que comporte ladite au moins une pince (6), comportent une autre partie (12) des moyens de communication (11 ; 12 ; 13) que comporte le dispositif de mise à la terre (1).

6. Dispositif de mise à la terre (1) selon la revendication 5, **caractérisé par le fait que** la partie (11 ; 12) des moyens de communication (11 ; 12 ; 13) que comportent les moyens de verrouillage (5) dudit au moins un étau (2), respectivement que comportent les moyens de verrouillage (9) de ladite au moins une pince (6), comporte, d'une part, des moyens d'émission qui sont configurés pour émettre des données relatives audit au moins un étau (2), respectivement des données relatives à ladite au moins une pince (6) et, d'autre part, des moyens de collecte qui sont configurés pour collecter des données qui sont configurées pour commander les moyens de verrouillage (5 ; 9) que comporte ledit au moins un étau (2), respectivement que comporte ladite au moins une pince (6), ceci au moins en fonction des données relatives à ladite au moins un pince (6), respectivement relatives audit au moins un étau (2).

7. Dispositif de mise à la terre (1) selon l'une quelconque des revendications précédentes, **caractérisé par le fait que** les moyens de verrouillage (5) que comporte ledit au moins un étau (2), respectivement les moyens de verrouillage (9) que comporte ladite au moins une pince (6), comportent des moyens d'identification qui identifient ledit au moins un étau (2), respectivement qui identifient ladite au moins une pince (6), qui comporte ces moyens de verrouillage (5 ; 9).

8. Dispositif de mise à la terre (1) selon l'une quelconque des revendications précédentes, **caractérisé par le fait que** les moyens de verrouillage (5) que comporte ledit au moins un étau (2), respectivement les moyens de verrouillage (9) que comporte ladite au moins une pince (6), comportent des moyens de détection (14 ; 15) qui sont configurés pour détecter la position inactive ou la position active de verrouillage adoptée par les moyens de verrouillage (5 ; 9) que comporte ledit au moins un étau (2), respectivement que comporte ladite au moins une pince (6).

9. Dispositif de mise à la terre (1) selon les revendications 7 ou 8, **caractérisé par le fait que** les moyens de communication (11 ; 12 ; 13) sont configurés pour communiquer des données relatives aux moyens d'identification et/ou à des données détectées par les moyens de détection (14 ; 15).

10. Dispositif de mise à la terre (1) selon l'une quelconque des revendications 2, 4, 5 ou 7, **caractérisé par le fait que** les moyens de verrouillage (5 ; 9), que comportent ledit au moins un étau (2) et/ou ladite au moins une pince (6), comportent au moins une carte électronique (16 ; 17) qui comporte au moins une partie des moyens d'actionnement (53 ; 93) et/ou qui comporte ladite partie (11 ; 12) des moyens de communication (11 ; 12 ; 13) et/ou qui comporte les moyens d'identification.

11. Dispositif de mise à la terre (1) selon l'une quelconque des revendications précédentes, **caractérisé par le fait que** les moyens de commande (10) comportent une partie (13) des moyens de communication (11 ; 12 ; 13) que comporte le dispositif de mise à la terre (1).

12. Dispositif de mise à la terre (1) selon la revendication 11, **caractérisé par le fait que** la partie (13) des moyens de communication (11 ; 12 ; 13) que comportent les moyens de commande (10), comporte, d'une part, des moyens de collecte qui sont configurés pour collecter des données relatives audit au moins un étau (2), respectivement relatives à ladite au moins une pince (6) et, d'autre part, des moyens d'émission qui sont configurés pour émettre des données, qui sont fonction des données collectées, et qui sont configurées pour commander les moyens de verrouillage (9 ; 5) que comporte ladite au moins une pince (6), respectivement ledit au moins un étau (2), ceci en fonction des données relatives audit au moins un étau (2), respectivement à ladite au moins un pince (6).

13. Dispositif de mise à la terre (1) selon l'une quelconque des revendications précédentes, **caractérisé par le fait que** les moyens de commande (10) comportent, d'une part, des moyens de collecte qui sont configurés pour collecter des données relatives audit au moins un étau (2), respectivement des données relatives à ladite au moins une pince (6), d'autre part, des moyens d'analyse qui sont configurés pour analyser ces données collectées et, d'autre part encore, des moyens d'émission qui sont configurés pour émettre des données, qui sont fonction des données collectées et analysées, et qui sont configurées pour commander les moyens de verrouillage (9 ; 5) que comporte ladite au moins une pince (6), respectivement ledit au moins un étau (2).

14. Dispositif de mise à la terre (1) selon l'une quelconque des revendications précédentes, **caractérisé par le fait que** les moyens de commande (10) comportent des moyens d'enregistrement de données qui sont configurés pour enregistrer des données relatives audit au moins un étau (2) et/ou des données relatives à ladite au moins une pince (6) et/ou des données qui sont configurées pour commander les moyens de verrouillage (5) que comporte ledit au moins un étau (2) et/ou des données qui sont configurées pour commander les moyens de verrouillage (9) que comporte ladite au moins une pince (6).

15. Dispositif de mise à la terre (1) selon l'une quelconque des revendications précédentes, **caractérisé par le fait que**, d'une part, les moyens de commande (10) comportent des moyens de connexion électrique (18) et, d'autre part, les moyens de verrouillage (5 ; 9), que comportent ledit au moins un étau (2) et ladite au moins une pince (6), comportent des moyens de connexion électrique complémentaires (19 ; 20) qui sont configurés pour coopérer avec les moyens de connexion (18) que comportent les moyens de commande (10).

## Patentansprüche

1. Vorrichtung (1) zur Erdung von mindestens einem elektrischen Leiter (B; B'; B") einer elektrischen Freileitung (A), wobei diese Vorrichtung (1) aufweist:
- mindestens einen Schraubstock (2), der jeweils einerseits Klemmmittel (3), die ausgelegt sind, um einen solchen Schraubstock (2) an ein geerdetes Element (C) zu klemmen, und die eine aktive Klemmposition und eine inaktive Klemmposition eines solchen Schraubstocks (2) an das geerdete Element (C) einnehmen, und andererseits Bedienmittel (4), die ausgelegt sind, um die Klemmmittel (3) zwischen der aktiven Klemmposition und der inaktiven Klemmposition eines solchen Schraubstocks (2) zu bedienen, und andererseits noch Verriegelungsmittel (5) aufweist, die ausgelegt sind, um die Bedienmittel (4) in einer inaktiven Bedienposition zu verriegeln, und die eine aktive Verriegelungsposition und eine inaktive Verriegelungsposition dieser Bedienmittel (4) einnehmen,
- mindestens eine Klemme (6), die jeweils einerseits Klemmmittel (7), die ausgelegt sind, um eine solche Klemme (6) an den elektrischen Leiter (B; B'; B") oder an einen der elektrischen Leiter (B; B; B") zu klemmen, und die eine aktive Klemmposition und eine inaktive Klemmposition einer solchen Klemme (6) an einem solchen elektrischen Leiter (B : B'; B") einnehmen, und andererseits Bedienmittel (8), die ausgelegt sind, um die Klemmmittel (7) zwischen der aktiven Klemmposition und der inaktiven Klemmposition einer solchen Klemme (6) zu bedienen, und andererseits noch Verriegelungsmittel (9) aufweist, die ausgelegt sind, um die Bedienmittel (8) in einer inaktiven Bedienposition zu verriegeln, und die eine aktive Verriegelungsposition und eine inaktive Verriegelungsposition dieser Bedienmittel (8) einnehmen;
- Steuermittel (10), die entfernbar sind und die ausgelegt sind, um die Verriegelungsmittel (5), die der mindestens eine Schraubstock (2) aufweist, sowie die Verriegelungsmittel (9), die die mindestens eine Klemme (6) aufweist, zu steuern;
- mindestens ein elektrisches Kabel (E), das jeweils ausgelegt ist, um den mindestens einen Schraubstock (2) mit einer der Klemmen (6) zu verbinden;
- **dadurch gekennzeichnet, dass:**
- die Erdungsvorrichtung (1) Kommunikationsmittel (11; 12; 13) aufweist, die ausgelegt sind, um Daten zwischen einerseits den Steuermitteln (10) und andererseits den Verriegelungsmitteln (5), die der mindestens eine Schraubstock (2) aufweist, und den Verriegelungsmitteln (9), die die mindestens eine Klemme (6) aufweist, zu kommunizieren,
- die Steuermittel (10) ausgelegt sind, um die Verriegelungsmittel (5), die der mindestens eine Schraubstock (2) aufweist, und die Verriegelungsmittel (9), die die mindestens eine Klemme (6) aufweist, zu steuern, und zwar in Abhängigkeit von Daten, die zwischen einerseits diesen Steuermitteln (10) und andererseits diesen Verriegelungsmitteln (5), die der mindestens eine Schraubstock (2) aufweist, und diesen Verriegelungsmitteln (9), die die mindestens eine Klemme (6) aufweist, kommuniziert werden.

2. Erdungsvorrichtung (1) nach Anspruch 1, **dadurch gekennzeichnet, dass** die Verriegelungsmittel (5; 9) einerseits ein Verriegelungsorgan (50; 90), das eine aktive Verriegelungsposition und eine inaktive Verriegelungsposition der Bedienmittel (4; 8) einnimmt, andererseits Positionierungsmittel (51, 52; 91, 92), die ausgelegt sind, um das Verriegelungsorgan (50; 90) in der aktiven Verriegelungsposition und in der inaktiven Verriegelungsposition zu positionieren, und andererseits noch Betätigungsmittel (53; 93) aufweisen, die ausgelegt sind, um diese Positionierungsmittel (51, 52; 91, 92) zu betätigen, dies unter dem Impuls der Steuermittel (10).

3. Erdungsvorrichtung (1) nach Anspruch 2, **dadurch gekennzeichnet, dass** die Positionierungsmittel (51, 52; 91, 92) einerseits Mittel (51; 91) zur Rückstellung des Verriegelungsorgans (50; 90) in die aktive beziehungsweise inaktive Verriegelungsposition und andererseits Mittel (52; 92) zur Mitnahme des Verriegelungsorgans (50; 90) in die inaktive beziehungsweise aktive Verriegelungsposition aufweisen.

4. Erdungsvorrichtung (1) nach einem der Ansprüche 2 oder 3,
**dadurch gekennzeichnet, dass** die Betätigungsmittel (53; 93) einerseits Mittel zum Halten des Verriegelungsorgans (50; 90) in der inaktiven beziehungsweise aktiven Verriegelungsposition und andererseits Steuermittel aufweisen, die ausgelegt sind, um diese Haltemittel zu steuern.

5. Erdungsvorrichtung (1) nach einem der vorstehenden Ansprüche, **dadurch gekennzeichnet, dass** die Verriegelungsmittel (5), die der mindestens eine Schraubstock (2) aufweist, einen Teil (11) der Kommunikationsmittel (11; 12; 13), die die Erdungsvorrichtung (1) aufweist, aufweisen, während die Verriegelungsmittel (9), die die mindestens eine Klemme (6) aufweist, einen anderen Teil (12) der Kommunikationsmittel (11; 12; 13), die die Erdungsvorrichtung (1) aufweist, aufweisen.

6. Erdungsvorrichtung (1) nach Anspruch 5, **dadurch gekennzeichnet, dass** der Teil (11; 12) der Kommunikationsmittel (11; 12; 13), den die Verriegelungsmittel (5) des mindestens einen Schraubstocks (2) aufweisen, beziehungsweise den die Verriegelungsmittel (9) der mindestens einen Klemme (6) aufweisen, einerseits Sendemittel aufweist, die ausgelegt sind, um Daten bezüglich des mindestens einen Schraubstocks (2) beziehungsweise Daten bezüglich der mindestens einen Klemme (6) zu senden, und andererseits Sammelmittel aufweist, die ausgelegt sind, um Daten zu sammeln, die ausgelegt sind, um die Verriegelungsmittel (5; 9), die der mindestens eine Schraubstock (2) aufweist, beziehungsweise die die mindestens eine Klemme (6) aufweist, zu steuern, dies mindestens in Abhängigkeit von den Daten, die sich auf die mindestens eine Klemme (6) beziehen, beziehungsweise die sich auf den mindestens einen Schraubstock (2) beziehen.

7. Erdungsvorrichtung (1) nach einem der vorstehenden Ansprüche, **dadurch gekennzeichnet, dass** die Verriegelungsmittel (5), die der mindestens eine Schraubstock (2) aufweist, beziehungsweise die Verriegelungsmittel (9), die die mindestens eine Klemme (6) aufweist, Identifikationsmittel aufweisen, die den mindestens einen Schraubstock (2) identifizieren, beziehungsweise die die mindestens eine Klemme (6) identifizieren, die diese Verriegelungsmittel (5; 9) aufweist.

8. Erdungsvorrichtung (1) nach einem der vorstehenden Ansprüche, **dadurch gekennzeichnet, dass** die Verriegelungsmittel (5), die der mindestens eine Schraubstock (2) aufweist, beziehungsweise die Verriegelungsmittel (9), die die mindestens eine Klemme (6) aufweist, Erfassungsmittel (14; 15) aufweisen, die ausgelegt sind, um die inaktive Verriegelungsposition oder die aktive Verriegelungsposition zu erfassen, die von den Verriegelungsmitteln (5; 9), die der mindestens eine Schraubstock (2) aufweist, beziehungsweise die die mindestens eine Klemme (6) aufweist, eingenommen wird.

9. Erdungsvorrichtung (1) nach Anspruch 7 oder 8,
**dadurch gekennzeichnet, dass** die Kommunikationsmittel (11; 12; 13) ausgelegt sind, um Daten zu kommunizieren, die sich auf die Identifikationsmittel und/oder auf Daten beziehen, die von den Erfassungsmitteln (14; 15) erfasst werden.

10. Erdungsvorrichtung (1) nach einem der Ansprüche 2, 4, 5 oder 7, **dadurch gekennzeichnet, dass** die Verriegelungsmittel (5; 9), die der mindestens eine Schraubstock (2) und/oder die mindestens eine Klemme (6) aufweisen, mindestens eine elektronische Karte (16; 17) aufweisen, die mindestens einen Teil der Betätigungsmittel (53; 93) aufweist und/oder die den Teil (11; 12) der Kommunikationsmittel (11; 12; 13) aufweist und/oder die die Identifikationsmittel aufweist.

11. Erdungsvorrichtung (1) nach einem der vorstehenden Ansprüche, **dadurch gekennzeichnet, dass** die Steuermittel (10) einen Teil (13) der Kommunikationsmittel (11; 12; 13) aufweisen, die die Erdungsvorrichtung (1) aufweist.

12. Erdungsvorrichtung (1) nach Anspruch 11, **dadurch gekennzeichnet, dass** der Teil (13) der Kommunikationsmittel (11; 12; 13), den die Steuermittel (10) aufweisen, einerseits Sammelmittel aufweist, die ausgelegt sind, um Daten zu sammeln, die sich auf den mindestens einen Schraubstock (2) beziehungsweise auf die mindestens eine Klemme (6) beziehen, und andererseits Sendemittel, die ausgelegt sind, um Daten zu senden, die von den gesammelten Daten abhängig sind, und die ausgelegt sind, um die Verriegelungsmittel (9; 5), die die mindestens eine Klemme (6) beziehungsweise der mindestens eine Schraubstock (2) aufweist, zu steuern, dies in Abhängigkeit von den Daten, die sich auf den mindestens einen Schraubstock (2) beziehungsweise die mindestens eine Klemme (6) beziehen.

13. Erdungsvorrichtung (1) nach einem der vorstehenden Ansprüche, **dadurch gekennzeichnet, dass** die Steuermittel (10) einerseits Sammelmittel, die ausgelegt sind, um Daten zu sammeln, die sich auf den mindestens einen Schraubstock (2) beziehungsweise auf die mindestens eine Klemme (6) beziehen, andererseits Analysemittel, die ausgelegt sind, um diese gesammelten Daten zu analysieren, und andererseits noch Sendemittel aufweisen, die ausgelegt sind, um Daten zu senden, die von den gesammelten und analysierten Daten abhängen, und die ausgelegt sind, um die Verriegelungsmittel (9; 5), die die mindestens eine Klemme (6) beziehungsweise der mindestens eine Schraubstock (2) aufweist, zu steuern.

14. Erdungsvorrichtung (1) nach einem der vorstehenden Ansprüche, **dadurch gekennzeichnet, dass** die Steuermittel (10) Datenaufzeichnungsmittel aufweisen, die ausgelegt sind, um Daten bezüglich des mindestens einen Schraubstocks (2) und/oder Daten bezüglich der mindestens einen Klemme (6) und/oder Daten, die ausgelegt sind, um die Verriegelungsmittel (5), die der mindestens eine Schraubstock (2) aufweist, zu steuern, und/oder Daten aufzuzeichnen, die ausgelegt sind, um die Verriegelungsmittel (9), die die mindestens eine Klemme (6) aufweist, zu steuern.

15. Erdungsvorrichtung (1) nach einem der vorstehenden Ansprüche, **dadurch gekennzeichnet, dass** einerseits die Steuermittel (10) Mittel (18) zum elektrischen Verbinden aufweisen und andererseits die Verriegelungsmittel (5; 9), die der mindestens eine Spannstock (2) und die mindestens eine Klemme (6) aufweisen, ergänzende Mittel (19; 20) zum elektrischen Verbinden aufweisen, die ausgelegt sind, um mit den Verbindungsmitteln (18), die die Steuermittel (10) aufweisen, zusammenzuwirken.

## Claims

1. A device (1) for grounding at least one electrical conductor (B; B'; B") of an overhead power line (A), said device (1) comprising:
- at least one vice (2), each of which comprises, on the one hand, clamping means (3) which are configured to clamp such a vice (2) onto an element connected to the ground (C), and which adopt an active clamping position and an inactive clamping position of such a vice (2) onto said element connected to the ground (C) and, on the other hand, movement means (4) which are configured to move the clamping means (3) between the active clamping position and the inactive clamping position of such a vice (2) and, furthermore, locking means (5) which are configured to lock the movement means (4) in an inactive movement position, and which adopt an active locking position and an inactive locking position of said movement means (4);
- at least one gripper (6), each of which comprises, on the one hand, clamping means (7) which are configured to clamp such a gripper (6) onto the electrical conductor (B; B'; B") or onto one of the electrical conductors (B; B; B"), and which adopt an active clamping position and an inactive clamping position of such a gripper (6) onto such an electrical conductor (B; B'; B") and, on the other hand, movement means (8) which are configured to move the clamping means (7) between the active clamping position and the inactive clamping position of such a gripper (6) and, furthermore, locking means (9) which are configured to lock the movement means (8) in an inactive movement position, and which adopt an active locking position and an inactive locking position of said movement means (8);
- control means (10) which are removable and configured to control the locking means (5) on said at least one vice (2) as well as the locking means (9) on said at least one gripper (6);
- at least one electrical cable (E), each of which is configured to connect said at least one vice (2) to one of said grippers (6);
- **characterized in that:**
- the grounding device (1) comprises communication means (11; 12; 13) which are configured to communicate data between, on the one hand, the control means (10) and, on the other hand, the locking means (5) on said at least one vice (2) and the locking means (9) on said at least one gripper (6);
- the control means (10) are configured to control the locking means (5) on said at least one vice (2) and the locking means (9) on said at least one gripper (6) according to the data communicated between, on the one hand, the control means (10) and, on the other hand, the locking means (5) on said at least one vice (2) and the locking means (9) on said at least one gripper (6).

2. The grounding device (1) according to claim 1, **characterized in that** the locking means (5; 9) comprise, on the one hand, a locking member (50; 90) which adopts an active locking position and an inactive locking position of the movement means (4; 8) and, on the other hand, positioning means (51, 52; 91, 92) which are configured to position said locking member (50; 90) in the active locking position and in the inactive locking position and, furthermore, actuation means (53; 93) which are configured to actuate the positioning means (51, 52; 91, 92) under the impulse of the control means (10).

3. The grounding device (1) according to claim 2, **characterized in that** the positioning means (51, 52; 91, 92) comprise, on the one hand, means (51; 91) for returning said locking member (50; 90) to the active or inactive locking position and, on the other hand, means (52; 92) for driving said locking member (50; 90) into the inactive or active locking position.

4. The grounding device (1) according to either of claims 2 or 3, **characterized in that** the actuation means (53; 93) comprise, on the one hand, means for holding said locking member (50; 90) in the inactive or active locking position and, on the other hand, control means configured to control said holding means.

5. The grounding device (1) according to any of the preceding claims, **characterized in that** the locking means (5) on said at least one vice (2) comprise a portion (11) of the communication means (11; 12; 13) on the grounding device (1) while the locking means (9) on said at least one gripper (6) comprise another portion (12) of the communication means (11; 12; 13) on the grounding device (1).

6. The grounding device (1) according to claim 5, **characterized in that** the portion (11; 12) of the communication means (11; 12; 13) on the locking means (5) of said at least one vice (2) and on the locking means (9) of said at least one gripper (6) respectively comprises, on the one hand, transmission means which are configured to transmit data relating to said at least one vice (2) and data relating to said at least one gripper (6) respectively and, on the other hand, collection means which are configured to collect data which are configured to control the locking means (5; 9) on said at least one vice (2) and on said at least one gripper (6) respectively, at least according to the data relating to said at least one gripper (6) and relating to said at least one vice (2) respectively.

7. The grounding device (1) according to any of the preceding claims, **characterized in that** the locking means (5) on said at least one vice (2) and the locking means (9) on said at least one gripper (6) respectively comprise identification means which identify said at least one vice (2) and said at least one gripper (6) comprising said locking means (5; 9), respectively.

8. The grounding device (1) according to any of the preceding claims, **characterized in that** the locking means (5) on said at least one vice (2) and the locking means (9) on said at least one gripper (6) respectively comprise detection means (14; 15) configured to detect the inactive locking position or the active locking position adopted by the locking means (5; 9) on said at least one vice (2) and on said at least one gripper (6) respectively.

9. The grounding device (1) according to either of claims 7 or 8, **characterized in that** the communication means (11; 12; 13) are configured to communicate data relating to the identification means and/or to data detected by the detection means (14; 15).

10. The grounding device (1) according to any of claims 2, 4, 5 or 7, **characterized in that** the locking means (5; 9) on said at least one vice (2) and/or said at least one gripper (6) comprise at least one electronic card (16; 17) which comprises at least one portion of the actuation means (53; 93) and/or which comprises said portion (11; 12) of the communication means (11; 12; 13) and/or which comprises the identification means.

11. The grounding device (1) according to any of the preceding claims, **characterized in that** the control means (10) comprise a portion (13) of the communication means (11; 12; 13) on the grounding device (1).

12. The grounding device (1) according to claim 11, **characterized in that** the portion (13) of the communication means (11; 12; 13) on the control means (10) comprises, on the one hand, collection means which are configured to collect data relating to said at least one vice (2) and to said at least one gripper (6) respectively and, on the other hand, transmission means which are configured to transmit data, which depend on the data collected, and which are configured to control the locking means (9; 5) on said at least one gripper (6) and on said at least one vice (2) respectively, according to the data relating to said at least one vice (2) and to said at least one gripper (6) respectively.

13. The grounding device (1) according to any of the preceding claims, **characterized in that** the control means (10) comprise, on the one hand, collection means which are configured to collect data relating to said at least one vice (2) and data relating to said at least one gripper (6) respectively and, on the other hand, analysis means which are configured to analyze said collected data and, furthermore, transmission means which are configured to transmit data, which depend on the data collected and analyzed, and which are configured to control the locking means (9; 5) on said at least one gripper (6) and on said at least one vice (2) respectively.

14. The grounding device (1) according to any of the preceding claims, **characterized in that** the control means (10) comprise data recording means which are configured to record data relating to said at least one vice (2) and/or data relating to said at least one gripper (6) and/or data which are configured to control the locking means (5) on said at least one vice (2) and/or data which are configured to control the locking means (9) on said at least one gripper (6).

15. The grounding device (1) according to any of the preceding claims, **characterized in that,** on the one hand, the control means (10) comprise electrical connection means (18) and, on the other hand, the locking means (5; 9) on said at least one vice (2) and on said at least one gripper (6) comprise complementary electrical connection means (19; 20) which are configured to interact with the connection means (18) on the control means (10).
